# EUROPEAN PATENT APPLICATION

(11) **EP 4 769 240 A1**
(43) Date of publication of application: **01.07.2026**
(21) Application number: 24425069.2
(22) Date of filing: 31.12.2024
(51) Int. Cl.: G06N 10/40

(54) **TUNEABLE COUPLER**

(71) Applicant: QuantrolOx Finland Oy, 02150 Espoo (FI); Università degli Studi di Napoli Federico II, 80138 Napoli (IT)
(72) Inventor: HERRMANN, Johannes, Zurich (CH); JÜNGER, Christian Helmut, Zurich (CH); AHMAD, Halima Giovanna, Napoli (IT); MASSAROTTI, Davide, Napoli (IT); SATARIANO, Roberta, Napoli (IT); TAFURI, Francesco, Napoli (IT); COSENZA, Carlo, Napoli (IT)
(74) Representative: EIP

(57) **Abstract**

An electronic circuit for a superconducting quantum processor unit is provided. The electronic circuit comprises a first group of circuit elements configured as a first superconducting qubit, a second group of circuit elements configured as a second superconducting qubit, and a third group of circuit elements comprising a ferromagnetic Josephson junction and configured as a tuneable coupler. The tuneable coupler is for selectively coupling the first superconducting qubit to the second superconducting qubit based on a magnetisation state of the ferromagnetic Josephson junction. A method of entangling superconducting qubits is also provided.

## Description

### Technical Field

The present disclosure relates to quantum computers, and in particular tuneable couplers for quantum processing units.

### Background

Many quantum algorithms are dependent upon the ability to generate entanglement between qubits. In the context of superconducting quantum processors, entangling qubit-qubit operations can be performed using a tuneable coupler. The tuneable coupler produces a switchable coupling between two neighbouring qubits, wherein the coupling strength is modifiable by application of analogue control voltage signals. The fidelity of the entanglement operations is highly reliant on precise calibration and accuracy of these signals, as analogue distortions and noise on the control voltage signals can alter the coupling and reduce fidelity of the qubit-qubit operations. It is desirable to improve qubit-qubit operations in superconducting quantum processors.

### Summary

According to a first aspect of the present disclosure, there is provided an electronic circuit for a superconducting quantum processor unit. The electronic circuit comprises a first group of circuit elements configured as a first superconducting qubit,
a second group of circuit elements configured as a second superconducting qubit, and
a third group of circuit elements comprising a ferromagnetic Josephson junction. The third group of circuit elements is configured as a tuneable coupler for selectively coupling the first superconducting qubit to the second superconducting qubit based on a magnetisation state of the ferromagnetic Josephson junction.

A "circuit element", as described herein, refers to a device suitable for use in an electronic circuit such as a capacitor, wire, inductor, or Josephson junction, for example. A "superconducting qubit", as described herein, refers to a two-state quantum mechanical system realised by an electronic circuit operated in the superconducting regime. Unless specified otherwise, a "superconducting qubit" as described herein encompasses phase, charge, and flux qubit archetypes and includes archetypes such as transmon, quantronium, or fluxonium qubits. Accordingly, the precise constituent circuit elements within a "group of circuit elements" can vary depending on the particular qubit archetype of an example. A "coupler", as described herein, refers to a device which generates entanglement between two or more qubits by mediating an (effective) interaction between the qubits. Generating entanglement between two or more qubits refers to generating a quantum mechanical state in which the state of a first qubit cannot be described independently of the state of a second qubit. A coupler therefore connects degrees of freedom in the individual qubits. A "tuneable" coupler, as described herein, refers to a coupling strength of the coupler being selectable. In other words, the coupling strength can be varied responsive to some control parameter. This can be contrasted with a coupler which generates a substantially fixed coupling behaviour, wherein substantially fixed can mean within operational noise, for example, or whose coupling strength is only variable by a small amount, such as ±10% of some coupling strength, for example. A "magnetisation state" of the ferromagnetic Josephson junction, as described herein, can refer to the (average) magnetic moment per unit volume of the ferromagnetic Josephson junction, for example.

For brevity, the first and superconducting qubits may be referred to herein as the first and second qubits, respectively. Similarly, the tuneable coupler may be referred to herein as the coupler.

By using a tuneable coupler comprising a ferromagnetic Josephson junction, the tuneable coupler can be controlled by application of magnetic field pulses which modify the magnetisation state of the ferromagnetic Josephson junction. This can provide a more robust approach than conventional techniques. Conventional techniques based around using SQUIDs (superconducting quantum interference devices) commonly require both magnetic field pulses in combination with application of a static magnetic field. This combination can suffer from distortion of control pulses. Static magnetic fields are more sensitive to signal distortions and can induce flux noise as well as other noise components. Therefore, signal distortions induced by room-temperature analog control signals are prevented or otherwise reduced. The coupling between the first and second superconducting qubits can be less sensitive to the nature of the applied magnetic field pulse, compared with conventional tuneable coupling techniques in which the coupling scheme can be highly sensitive to analogue distortions and noise in applied control voltage signals. Conventional tuneable coupling techniques are affected by flux noise due to static magnetic fields applied in a superconducting loop. By replacing such a loop with a single ferromagnetic Josephson junction, noise and drift of control signal parameters can be prevented or reduced. Also, by facilitating control through just magnetic field pulses, and without requiring application of a static magnetic field, improved scalability of room-temperature electronic equipment, which is used in control of the electronic circuit, can be achieved, due to simplified requirements of the control signals for driving the magnetic field source.

In some examples, the tuneable coupler, responsive to an applied magnetic field to the ferromagnetic Josephson junction, is switchable between: a first state in which the tuneable coupler couples the first superconducting qubit to the second superconducting qubit with a first coupling strength; and a second state in which the first superconducting qubit and the second superconducting qubit are substantially decoupled or are coupled by a second coupling strength which is less than the first coupling strength. The first state can be an "on" state in which coupling between the first and second qubits can be enabled, and the second state can be an "off" state in which coupling between the first and second qubits is reduced, or in which the first and second qubit are substantially decoupled. "Substantially decoupled", as referred to herein, can mean that to within operational or manufacturing tolerances, the first qubit and second qubit do not interact with one another. In the second state there may be some non-zero amount of coupling between the first and second qubit which may be tolerable during operation, for example, and/or may be compensated for during operation, for example. In some such examples, the tuneable coupler is configured to operate as a switching device in that the tuneable coupler is configured to be operated in one of the first state or the second state, but not in a third or further states, for example. This can allow for a simplified control scheme. In other examples, the tuneable coupler is configured to be operable in third or further states, in addition to the first state and the second state. The coupling strength may be different in each respective state.

In some examples, the tuneable coupler is in the first state when the ferromagnetic Josephson junction is magnetised, and in the second state when the ferromagnetic Josephson junction is less strongly magnetised than in the first state or is demagnetised.

In some examples, the tuneable coupler is switchable from the second state to the first state by application of a pulse in the applied magnetic field. The pulse may correspond to the magnetic field being applied for a duration such as 50 nanoseconds, for example.

In some examples, the tuneable coupler is switchable from the first state to the second state by application of a demagnetization sequence comprising a plurality of pulses in the applied magnetic field. The demagnetisation sequence may correspond to the magnetic field being applied with a time-varying direction.

In some examples, the ferromagnetic Josephson junction has a first critical current value whilst in the first state and a second, different, critical current value whilst in the second state. In some such examples, a difference between the first critical current value and the second critical current value is between 30% and 40% of the value of the second critical current value. This can facilitate a distinct separation between the control behaviours of the first state and the second state.

In some examples, the second coupling strength is less than 1% of the first coupling strength. Accordingly, in the first state the coupling can be relatively strong and qubit-qubit operations can be performed effectively, whereas in the second state the coupling is relatively weak and the qubits remain well-isolated from one another.

In some examples, the ferromagnetic Josephson junction is a superconducting tunnel junction. In some such examples, the ferromagnetic Josephson junction comprises a first superconducting electrode, a second superconducting electrode, and a barrier separating the first superconducting electrode from the second superconducting electrode, the barrier comprising an insulating material and a ferromagnetic material or an insulating ferromagnetic material. For example, the ferromagnetic Josephson junction may comprise a superconductor / insulator / superconductor / ferromagnet / superconductor layer structure.

In some examples, the first superconducting qubit and the second superconducting qubit are absent ferromagnetic material. That is, the first superconducting qubit and second superconducting qubit may be controlled by conventional microwave drive lines, for example, whereas the tuneable coupler is controlled by application of a magnetic field pulse. In other examples, the first superconducting qubit and/or the second superconducting qubit may comprise ferromagnetic material, and may be configured as ferro-transmon qubits, for example, whose characteristics are tuneable by application of magnetic field pulses, for example.

In some examples, the electronic circuit is absent read-out circuit elements which interface with the third group of circuit elements. That is, the third group of circuit elements which are operable as the tuneable coupler may be relatively compact compared with circuits in which couplers are provided with additional read-out circuitry, for example.

In some examples, the tuneable coupler is configured to be capacitively coupled with at least one of the first superconducting qubit and the second superconducting qubit. In other examples, the tuneable coupler may be configured to be inductively coupled with at least one of the first superconducting qubit and the second superconducting qubit. In some examples, the coupling may be partly inductive and partly capacitive. In some examples, the tuneable coupler is configured to be coupled to the first qubit by a first mechanism and to the second qubit by a second, different mechanism.

In some examples, the tuneable coupler is configured to couple the first superconducting qubit to the second superconducting qubit by a cross-Kerr ZZ interaction. The cross-Kerr ZZ interaction is mediated by the capacitive or inductive coupling of the tuneable coupler to the first and second superconducting qubits. The tuneable coupler may therefore facilitate gates such as a controlled-phase (CPHASE) or controlled-Z gate (CZ) gate. In other examples, the tuneable coupler is configured to implement SWAP gates or the like. In some examples, a direct exchange interaction between energy levels of the system may be facilitated by the tuneable coupler.
According to a second aspect of the present disclosure, there is provided a system comprising the electronic circuit of the first aspect and a magnetic field source for applying the magnetic field to the ferromagnetic Josephson junction.

In some examples, the magnetic field source is an on-chip flux bias line. An on-chip flux bias line comprises, proximal to the ferromagnetic Josephson junction, a wire shorted to a ground plane on-chip. In some examples, the magnetic field source is a superconducting coil, optionally formed of Niobium-Titanium or any other suitable alloy or material. The magnetic field source may be controlled by application of a digital control voltage signal.
According to a third aspect of the present disclosure, there is provided a quantum processing unit comprising the electronic circuit of the first aspect or the system of the second aspect. The quantum processing unit may interface with a classical processor which orchestrates operation of the quantum processing unit.
According to a fourth aspect of the present disclosure, there is provided a method of entangling superconducting qubits. The method comprises initialising a first superconducting qubit and a second superconducting qubit; and applying a magnetic field pulse to a ferromagnetic Josephson junction of a tuneable coupler to selectively couple the first superconducting qubit and the second superconducting qubit. In accordance with the discussion of the first aspect, the method can facilitate a robust control method for a tuneable coupler which can facilitate high fidelity operation of two-qubit operations.

The method may further comprise performing an operation on the first and second superconducting qubit whilst the first superconducting qubit is coupled, by the tuneable coupler, to the second superconducting qubit. The operation may be a constituent part of a quantum algorithm. The method may further comprise configuring the tuneable coupler into a non-coupling state such that the first superconducting qubit is not coupled to the second superconducting qubit.

The method may be performed using the electronic circuit of the first aspect, the system of the second aspect or the quantum processing unit of the third aspect. Accordingly, it will be understood that where functions performed by apparatus of the present disclosure are described herein, that these can correspond to further method steps which comprise performing said functions.

According to a further aspect of the present disclosure, there is provided a non-transitory computer-readable storage medium comprising instructions which, when executed by a processor or processing system, cause the processor or processing system to perform the steps of the method of the fourth aspect of the present disclosure.

According to a yet further aspect of the present disclosure, there is provided a processing system configured to perform the method of the fourth aspect of the present disclosure.

Further features and advantages of the present disclosure will become apparent from the following description of preferred embodiments of the present disclosure, given by way of example only, which is made with reference to the accompanying drawings.

### Brief Description of the Drawings

Figure 1 shows, schematically, an electronic circuit for a superconducting quantum processor according to examples;
Figure 2 shows, schematically, a superconducting quantum processor according to examples;
Figure 3 shows, schematically, the electronic circuit of Figure 1;
Figure 4 shows the ferromagnetic Josephson junction according to an example;
Figures 5-8 illustrate behaviour of a tuneable coupler of the electronic circuit according to examples;
Figure 9 illustrates a system for performing a quantum algorithm including the superconducting quantum processor and electronic circuit of Figures 1 and 2; and
Figure 10 illustrates method steps for entangling qubits according to an example.

### Detailed Description

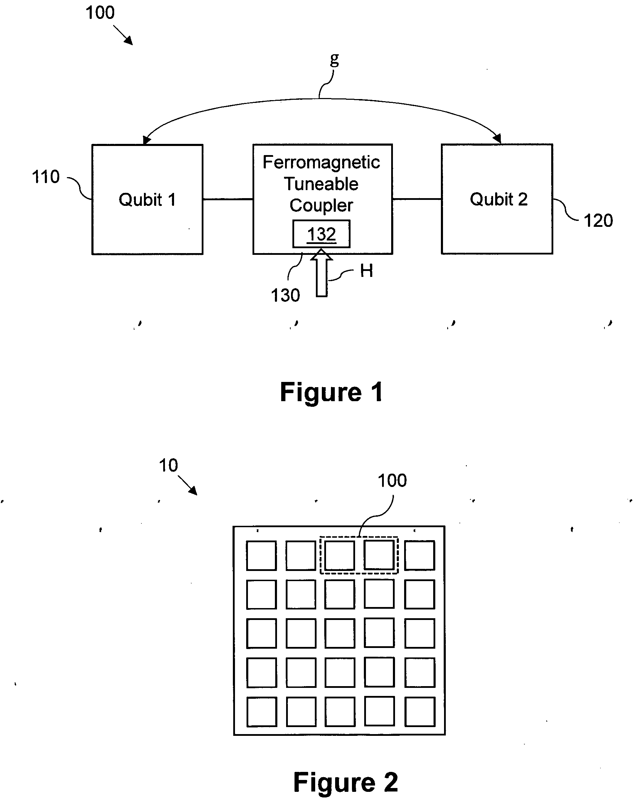

In accordance with the present disclosure, an electronic circuit 100 is depicted schematically in Figure 1, according to an example. The electronic circuit 100 is for a superconducting quantum processor unit 10, depicted in Figure 2, and represents a portion of an overall electronic circuit arrangement of the superconducting quantum processor unit 10. The electronic circuit 100 comprises an arrangement of circuit elements. A first group of circuit elements of the electronic circuit 100 is operable as a first superconducting qubit 110. A second group of circuit elements is operable as a second superconducting qubit 120. A third group of circuit elements is operable as a tuneable coupler 130. The function of the electronic circuit 100 is explained below at an overarching level. The electronic circuit 100 is depicted as an equivalent electronic circuit having electronic characteristics for performing a function described hereafter. It will be understood that the precise arrangement of constituent circuit elements of the electronic circuit 100 to bring about the electronic characteristics of the equivalent electronic circuit can vary between examples.

The first and second superconducting qubits 110, 120 are, in this example, each transmon qubits, but more generally represent any form of superconducting qubit archetype. The first superconducting qubit 110 need not have the same form as the second superconducting qubit 120. As will be understood by the skilled person, in isolation, each of the first and second superconducting qubits can respectively be operated as a two-level quantum mechanical systems which can be placed into a first state |0〉, a second state |1〉, and some coherent superposition of these states |*ψ*〉 = *α*|0〉 + *β*|1〉. The states of a superconducting qubit generally relate to behaviours such as how charge flows around the electronic circuit, depending upon operating principles of the qubit archetype.

The tuneable coupler 130 is selectively operable in two modes. In a first mode, the tuneable coupler is for coupling the first qubit 110 to the second qubit 120 with some coupling strength g. The coupling strength g corresponds to a degree of interaction between the first qubit 110 and second qubit 120. The coupling strength g can be understood to relate to a measure of the rate at which excitations are exchanged between the first qubit 110 and the second qubit 120. Coupling the first qubit 110 to the second qubit 120 allows for creation of an entangled state, which is a fundamental building block of quantum computing algorithms. In a second mode of the tuneable coupler 130, interaction between the first qubit 110 and the second qubit 120 is effectively switched off by reducing the coupling strength g relative to the first mode of the tuneable coupler 130.

The tuneable coupler 130 comprises a ferromagnetic Josephson junction 132. Application of a pulsed magnetic field H to the ferromagnetic Josephson junction 132 allows parameters of the tuneable coupler 130 to be modified such that the tuneable coupler 130 can be placed into the first mode or the second mode. For example, a resonant frequency of the tuneable coupler 130 may be modified by application of the magnetic field pulse to the ferromagnetic Josephson junction 132 such that it mediates coupling between the first and second qubit. Other arrangements in which other parameters of the tuneable coupler 130 are additionally or alternatively modified by application of the magnetic field pulse to the ferromagnetic Josephson junction 132 are envisaged.

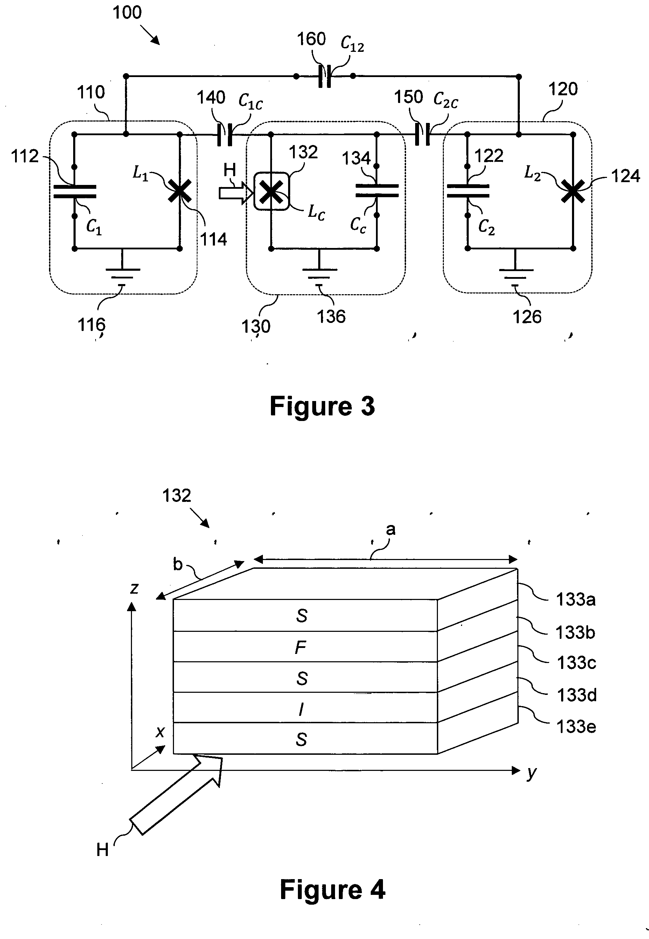

Having described the function of the electronic circuit 100 at an overarching level, an exemplary arrangement for the electronic circuit 100 is now described with reference to Figure 3.

The first qubit 110 is a transmon qubit and includes, arranged in a parallel LC configuration, a first capacitor 112 having a first capacitance *C*₁ and a first Josephson junction 114 having a first non-linear inductance *L*₁, and a first earth ground 116. The second qubit 120 is also a transmon qubit and includes, arranged in a parallel LC configuration, a second capacitor 122 having a second capacitance *C*₂ and a second Josephson junction 124 having a second non-linear inductance *L*₂, and a second earth ground 126.

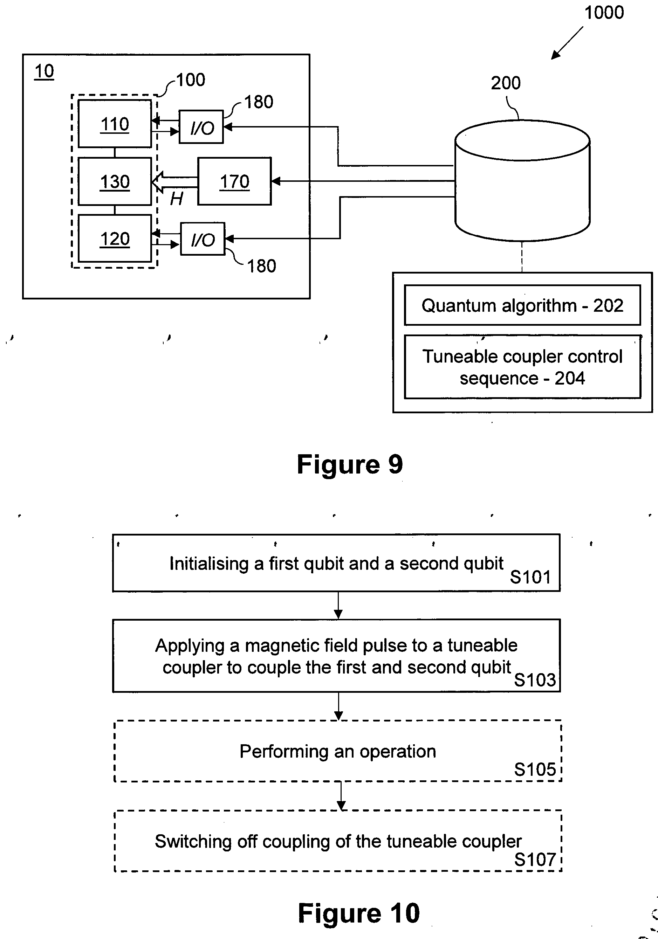

The first qubit 110 and the second qubit 120 are coupled to respective control circuits and read-out circuits (not shown here, but depicted schematically in Figure 9). Each control circuit facilitates the application of single- and two-qubit gate operations, for example by capacitive coupling of a microwave drive line to the respective qubit. Each read-out circuit facilitates measurement of the qubit, for example by performing a dispersive readout technique in which the qubit is coupled to a readout resonator.

The tuneable coupler 130 comprises, arranged in a parallel LC configuration, the ferromagnetic Josephson junction 132 with a respective magnetisation-dependent non-linear inductance *L_{C}* and a third capacitor 134 with third capacitance *C_{C}.*

The first qubit 110 is capacitively coupled to the tuneable coupler 130 by a fourth capacitor 140 with a fourth capacitance *C*_{1*C*}. The second qubit 120 is capacitively coupled to the tuneable coupler 130 by a fifth capacitor 150 with a fifth capacitance *C*_{2*C*}. In this way, the tuneable coupler 130 is respectively coupled to both the first qubit 110 and the second qubit 120 and can mediate interactions between the first qubit 110 and the second qubit 120. The first qubit 110 and second qubit 120 are capacitively coupled directly together by a sixth capacitor 160 having a sixth capacitance *C*₁₂. The presence of this direct capacitance between the first 110 and second qubit 120 may not be present in examples where the circuit is arranged as a series LC circuit to ground, for example.

Figure 4 depicts the ferromagnetic Josephson junction 132 in more detail, according to an example. A set of orthogonal reference axes *x, y, z* are provided. The ferromagnetic Josephson junction 132 is formed of a stack of layers which includes a first superconductor electrode 133a, a layer of ferromagnetic material 133b, an intermediate superconductor layer 133c, an insulating layer 133d, and a second superconductor electrode 133e. The layers 133a-e are stacked in the direction of the *z* axis.

To provide a further sense of the structure of the ferromagnetic Josephson junction 132, in the direction of the *z* axis, the first superconductor electrode 133a may have a thickness of between 30-300 nanometres, the ferromagnetic material 133b may have a thickness of 1-10 nanometres, the intermediate superconductor layer 133c may have a thickness of between 20-40 nanometres, the insulating layer 133d may have a thickness of 1-5 nanometres, and the second superconductor electrode 133e may have a thickness of between 30-300 nanometres. The superconductor layers 133a, 133c, 133d may be formed of aluminium, the layer of ferromagnetic material 133b may be formed of permalloy (Ni-Fe or Py or any other suitable Py alloy such as Niobium-doped Py), and the insulating layer 133d may be formed of aluminium oxide. It will be appreciated that in other examples, other layer arrangements, dimensions, and materials are envisaged.

The ferromagnetic Josephson junction 132 has a rectangular cross-section in the plane formed by the *x* and *y* axes. The rectangular cross-section of the ferromagnetic Josephson junction 132 is characterised by a length a in the direction of the *y* axis, and a width *b* in the direction of the *x* axis, wherein the length *a* is longer than the width *b.* The magnetic field H is applied to the ferromagnetic Josephson junction 132 along its shortest dimension, which is the length *b* (in the direction of reference axis *x*).

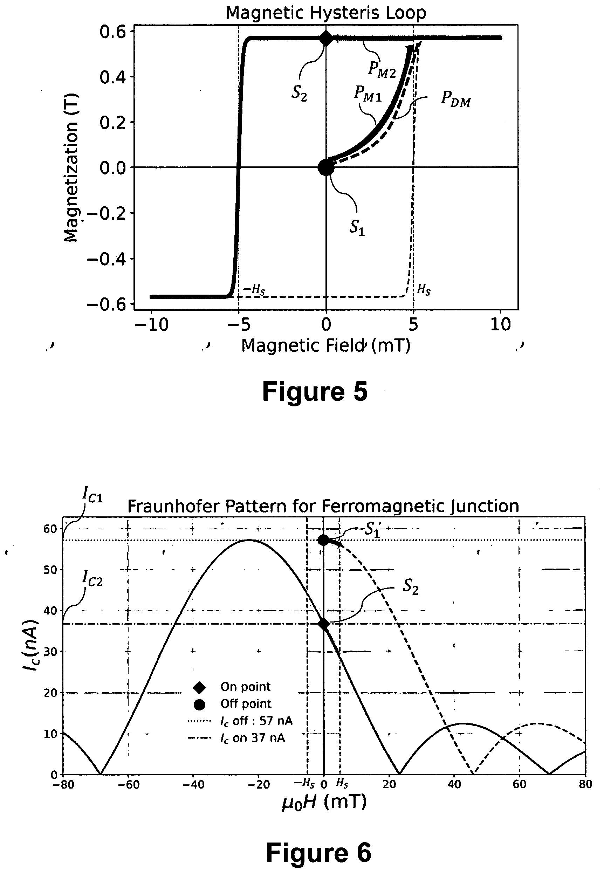

Figure 5 illustrates magnetic hysteresis behaviour of the ferromagnetic Josephson junction 132. The horizontal axis corresponds to a magnetic field H applied to the ferromagnetic Josephson junction 132, as mentioned previously. The vertical axis corresponds to the magnetisation of the ferromagnetic Josephson junction 132.

In a demagnetised state *S*₁ of the ferromagnetic Josephson junction 132, there is no applied field (H = 0 mT) and the ferromagnetic Josephson junction 132 has no magnetisation.

Upon application of a magnetisation pulse, comprising a rising edge *P*_{*M*1} in which the magnetic field is applied (H > 0) and a falling edge *P*_{*M*2} in which the magnetic field is turned off (H = 0), the ferromagnetic Josephson junction 132 acquires a magnetisation and is in a magnetised state *S*₂. The magnetisation pulse involves applying a magnetic field across the ferromagnetic Josephson junction 132 for a duration of time. The magnetised state *S*₂ persists after the application of the magnetisation pulse. It will be noted that, once in the magnetised state *S*₂, the magnetisation of the ferromagnetic Josephson junction 132 exhibits a substantially flat dependence upon external magnetic field around the zero-field region (where the external magnetic field = 0). Accordingly, the magnetisation of the ferromagnetic Josephson junction 132, and hence the behaviour of the tuneable coupler 130, is relatively robust to small perturbations in the external magnetic field.

Upon application of a demagnetisation sequence *P_{DM}*, which comprises a plurality of pulses in the applied magnetic field, and in particular repeatedly switching the polarity of the applied magnetic field and gradually reducing the external magnetic field to zero strength, the ferromagnetic Josephson junction 132 can be returned to the demagnetised state *S*₁*.*

Figure 6 illustrates a Fraunhofer pattern for the ferromagnetic Josephson junction 132. The horizontal axis corresponds to external magnetic field flux across the ferromagnetic Josephson junction 132, and the vertical axis corresponds to the critical current parameter *I_{C}* of the ferromagnetic Josephson junction 132. The critical current parameter *I_{C}* of a Josephson junction relates to the maximum supercurrent which can flow through the junction 132 without a voltage being induced across the junction. Figure 6 illustrates that when the ferromagnetic Josephson junction 132 is in the demagnetised state *S*₁ the critical current parameter has a first value *I_{C1},* and when the ferromagnetic Josephson junction is in the magnetised state *S*₂ the critical current parameter has a second value *I_{C2}.* The first value *I*_{*C*1} is larger than the second value *I*_{*C*2}*.* In other words, the critical current of the ferromagnetic Josephson junction 132 is higher in the demagnetised state *S*₁ than in the magnetised state *S*₂. The difference in critical current value *ΔI_{c},* which corresponds to the difference in critical currents *I_{C1}, I_{C2}* as a proportion of the larger critical current value *I_{C1},* is 36% in this example.

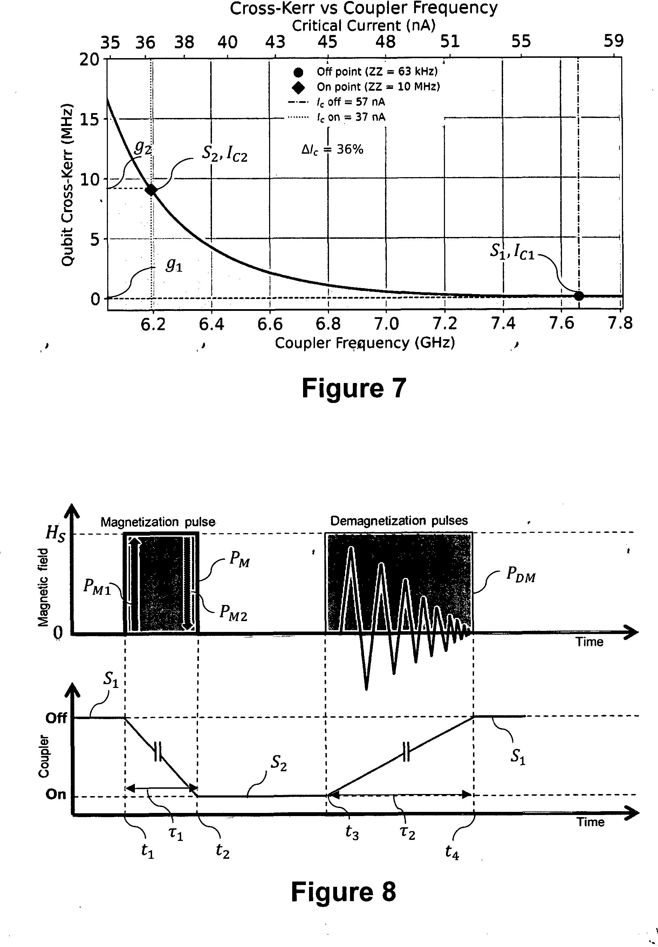

Figure 7 illustrates how the coupling strength g of the tuneable coupler 130 varies based on the magnetisation state of the ferromagnetic Josephson junction 132. In the exemplary electronic circuit 100 depicted in Figure 3, the tuneable coupler 130 facilitates a Cross-Kerr ZZ interaction between the first qubit 110 and the second qubit 120. Accordingly, in Figure 7, the vertical axis corresponds to a coupling rate between the first 110 and second qubit 120, and the horizontal axis corresponds to a resonant frequency of the tuneable coupler 130 which is based on the critical current *I_{C}* value of the ferromagnetic Josephson junction 132. The demagnetised state *S*₁ of the ferromagnetic Josephson junction 132 produces a relatively low coupling strength, with a coupling rate *g*₁ on the order of 60 kHz. The magnetised state *S*₂ of the ferromagnetic Josephson junction 132 produces a relatively high coupling strength, with a coupling rate *g*₂ on the order of 10 MHz. The coupling strength in the "off" state, which in this example is the demagnetised state, is 0.6% of the coupling strength in the "on" state, which in this example is the magnetised state.

Figure 8 illustrates the coupler state in correspondence with the applied magnetic field. A first set of axes depicts the applied magnetic field on the vertical axis in relation to time on the horizontal axis. A second set of axes depicts the coupler state on the vertical axis in relation to time on the horizontal axis. The tuneable coupler 130 starts in the demagnetised / off state *S*₁. A magnetisation pulse *P_{M}* is applied which involves a magnetic field H being applied *(P_{M1})* at a first time *t*₁ for a first duration *τ*₁ before being switched off (*P*_{*M*2}) at a second time *t*₂. This induces a magnetisation in the ferromagnetic Josephson junction 132, as explained by Figure 5. The tuneable coupler 130 is now in the magnetised / on state *S*₂ which means the first qubit 110 is coupled to the second qubit 120. Entangling operations can be performed on the first 110 and second qubit 120. Qubit-qubit operations can be performed in the absence of an applied static magnetic field. A demagnetisation sequence *P_{DM}* is applied at a third time *t*₃ for a second duration *τ*₂ until a fourth time *t*₄. This returns the tuneable coupler 130 to the off state *S*₁.

Figure 9 illustrates, schematically, a system 1000 for executing a quantum algorithm 202. The system 1000 comprises the quantum processing unit 10 depicted by Figure 2, which includes the electronic circuit 100 described by Figures 1 and 3.

The system 1000 further comprises a processor 200 which orchestrates operation of the quantum processing unit 10. In particular, the processor 200 has, in storage, computer-processable instructions defining a quantum algorithm 202 and a tuneable coupler control sequence 204. Although depicted as separate entity to the quantum processing unit 10, the processor 200 may be integrally formed within a same device as the quantum processing unit 10. Similarly, although depicted as a single entity 200, the processing capabilities of the processor 200 may be distributed across a variety of devices include cloud processing platforms, for example. The processor 200 should generally be understood to represent any suitable means for controlling operation of the quantum processing unit 10.

A magnetic field source 170 is configured to apply the magnetic field pulse H to the ferromagnetic Josephson junction 132 of the tuneable coupler 130 in accordance with the principles described earlier. The magnetic field source 170 may also be integrally formed as part of the electronic circuit 10, or may be a separate physical device in proximity with the electronic circuit 10, for example, wherein "in proximity" means at a distance to apply a magnetic field pulse to the ferromagnetic Josephson junction 132. In an example, the magnetic field source 170 is an on-chip magnetic flux bias line. In an example, the magnetic field source 170 is a superconducting niobium-titanium coil, for example. The magnetic field source 170 may be controlled by application of a digital control voltage signal.

Control and read-out functionality is generally represented by inputs/outputs 180, which may comprise read-out resonators and microwave drive lines as described previously.

In use, the processor 200 executes the quantum algorithm 202 by performing a series of operations on the first qubit 110 and second qubit 120, and more generally on a plurality of qubits of the quantum processing unit 10. The processor 200 interfaces with the inputs/outputs 180 to perform control and make measurements as necessary. When interaction between the first qubit 110 and the second qubit 120 is required, the processor 200 can execute the tuneable coupler control sequence 204 to control the magnetic field source 170. For example, the tuneable coupler control sequence 204 may comprise control instructions which bring about application of a magnetisation pulse or a demagnetisation sequence of pulses on the tuneable coupler 130 to modulate the coupling between the first qubit 110 and the second qubit 120 as required.

Figure 10 illustrates steps of a method for entangling superconducting qubits. The method may be performed by the system 1000 of Figure 9.

At item S101, a first superconducting qubit and a second superconducting qubit are initialised. This step can generally represent steps performed to bring a quantum processing unit into operation, such as cooling down the quantum processing unit into a superconducting regime, performing some initial calibration of the circuit components to place them in a state of a two-state quantum system, and the like. The quantum processing unit may already be in a suitable state, and so this step may simply comprise preparing the first qubit and the second qubit into respective desired states. This step can also relate to remote operation of a quantum processing unit. For example, this step may comprise sending instructions from a first computing device to some remotely-accessible quantum processing system, wherein the first and second qubits are initialised by such instructions.

At item S103, a magnetic field pulse is applied to a ferromagnetic Josephson junction of a tuneable coupler to selectively couple the first superconducting qubit and the second superconducting qubit based on a magnetisation state of the ferromagnetic Josephson junction. The application of the magnetic field may, according to the scheme described in view of Figures 5-8, magnetise the ferromagnetic Josephson junction and put the tuneable coupler into an on state wherein the first qubit is coupled to the second qubit.

At item S105, an operation on the first and second superconducting qubits may be performed. The operation is performed whilst the tuneable coupler is in an on state, or, in other words, the operation is performed when the tuneable coupler is configured to facilitate coupling between the first and second qubit. This operation may be performed as part of the quantum algorithm 202. This operation may comprise a two-qubit gate operation, for example. The operation may comprise, by the control circuitry, acting upon either of the first or second qubit. The operation can be performed whilst the tuneable coupler does not have a static magnetic field applied to it, in contrast to some conventional coupling schemes.

At item S107, the tuneable coupler may be switched to an "off" state to switch off coupling between the first qubit and the second qubit. This may be performed by applying a demagnetisation sequence of pulses to the ferromagnetic Josephson junction, as described in view of Figure 8.

The above embodiments are to be understood as illustrative examples of the present disclosure. Further embodiments according to the present disclosure are envisaged.

For example, the example of Figure 3 schematically depicts transmon qubits, but other qubit archetypes are envisaged. Similarly, the example of Figure 3 depicts a tuneable coupler utilising capacitive coupling, but in other examples the electronic circuit is configured to utilise inductive coupling, for example.

The examples described so far depict coupling of a first qubit to a second qubit. It will be appreciated that the tuneable coupler may be used to facilitate coupling between three or further qubits.

In some examples, the tuneable coupler may lack read-out circuitry, but in other examples, read-out circuitry may be present to facilitate further calibration or characterisation steps, for example.

In some examples, rather than facilitate a cross-Kerr ZZ interaction, a direct-exchange interaction between energy levels may be facilitated by the tuneable coupler 130.
It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the disclosure, which is defined in the accompanying claims.

## Claims

1. An electronic circuit for a superconducting quantum processor unit, the electronic circuit comprising:
a first group of circuit elements configured as a first superconducting qubit,
a second group of circuit elements configured as a second superconducting qubit, and
a third group of circuit elements comprising a ferromagnetic Josephson junction and configured as a tuneable coupler for selectively coupling the first superconducting qubit to the second superconducting qubit based on a magnetisation state of the ferromagnetic Josephson junction.

2. The electronic circuit of claim 1, wherein the tuneable coupler, responsive to an applied magnetic field to the ferromagnetic Josephson junction, is switchable between:
a first state in which the tuneable coupler couples the first superconducting qubit to the second superconducting qubit with a first coupling strength; and
a second state in which the first superconducting qubit and the second superconducting qubit are substantially decoupled or are coupled by a second coupling strength which is less than the first coupling strength.

3. The electronic circuit of claim 2, wherein the tuneable coupler is in the first state when the ferromagnetic Josephson junction is magnetised, and in the second state when the ferromagnetic Josephson junction is less strongly magnetised than in the first state or is demagnetised.

4. The electronic circuit of claim 3, wherein the tuneable coupler is switchable from the second state to the first state by application of a pulse in the applied magnetic field.

5. The electronic circuit of claim 3 or 4, wherein the tuneable coupler is switchable from the first state to the second state by application of a demagnetization sequence comprising a plurality of pulses in the applied magnetic field.

6. The electronic circuit of any one of claims 2 to 5, wherein:
the ferromagnetic Josephson junction has a first critical current value whilst in the first state and a second, different, critical current value whilst in the second state; and
a difference between the first critical current value and the second critical current value is between 30% and 40% of the value of the second critical current value.

7. The electronic circuit of any one of claims 2 to 6, wherein the second coupling strength is less than 1% of the first coupling strength.

8. The electronic circuit of any previous claim, wherein the ferromagnetic Josephson junction is a superconducting tunnel junction, optionally wherein the ferromagnetic Josephson junction comprises a first superconducting electrode, a second superconducting electrode, and a barrier separating the first superconducting electrode from the second superconducting electrode, the barrier comprising an insulating material and a ferromagnetic material or an insulating ferromagnetic material.

9. The electronic circuit of any previous claim, wherein the first and second superconducting qubits are absent ferromagnetic material.

10. The electronic circuit of any previous claim, wherein the electronic circuit is absent read-out circuit elements which interface with the third group of circuit elements.

11. The electronic circuit of any previous claim wherein the tuneable coupler is configured to be capacitively coupled with at least one of the first superconducting qubit and the second superconducting qubit.

12. The electronic circuit of any previous claim, wherein the tuneable coupler is configured to couple the first superconducting qubit to the second superconducting qubit by a cross-Kerr ZZ interaction.

13. A system comprising the electronic circuit of any previous claim and a magnetic field source for applying the magnetic field to the ferromagnetic Josephson junction.

14. A quantum processing unit comprising the electronic circuit of any one of claims 1 to 12 or the system of claim 13.

15. A method of entangling superconducting qubits, comprising:
initialising a first superconducting qubit and a second superconducting qubit; and
applying a magnetic field pulse to a ferromagnetic Josephson junction of a tuneable coupler to selectively couple the first superconducting qubit and the second superconducting qubit based on a magnetisation state of the ferromagnetic Josephson junction.

## Amended claims

### Amended claims in accordance with Rule 137(2) EPC.

1. An electronic circuit (100) for a superconducting quantum processor unit (10), the electronic circuit comprising:
a first group of circuit elements (112, 114, 116) configured as a first superconducting qubit (110),
a second group of circuit elements (122, 124, 126) configured as a second superconducting qubit (120), and
a third group of circuit elements comprising a ferromagnetic Josephson junction (132) and configured as a tuneable coupler (130) for selectively coupling the first superconducting qubit to the second superconducting qubit based on a magnetisation state of the ferromagnetic Josephson junction.

2. The electronic circuit of claim 1, wherein the tuneable coupler, responsive to an applied magnetic field to the ferromagnetic Josephson junction, is switchable between:
a first state (*S*₂) in which the tuneable coupler couples the first superconducting qubit to the second superconducting qubit with a first coupling strength; and
a second state (*S*₁) in which the first superconducting qubit and the second superconducting qubit are substantially decoupled or are coupled by a second coupling strength which is less than the first coupling strength.

3. The electronic circuit of claim 2, wherein the tuneable coupler is in the first state when the ferromagnetic Josephson junction is magnetised, and in the second state when the ferromagnetic Josephson junction is less strongly magnetised than in the first state or is demagnetised.

4. The electronic circuit of claim 3, wherein the tuneable coupler is switchable from the second state to the first state by application of a magnetic field pulse.

5. The electronic circuit of claim 3 or 4, wherein the tuneable coupler is switchable from the first state to the second state by application of a demagnetization sequence (*P_{DM}*) comprising a plurality magnetic field pulses.

6. The electronic circuit of any one of claims 2 to 5, wherein:
the ferromagnetic Josephson junction has a first critical current value (*I*_{*C*2}) whilst in the first state and a second, different, critical current value (*I*_{*C*1}) whilst in the second state; and
a difference (Δ*I_{c}*) between the first critical current value and the second critical current value is between 30% and 40% of the value of the second critical current value.

7. The electronic circuit of any one of claims 2 to 6, wherein the second coupling strength is less than 1% of the first coupling strength.

8. The electronic circuit of any previous claim, wherein the ferromagnetic Josephson junction is a superconducting tunnel junction, optionally wherein the ferromagnetic Josephson junction comprises a first superconducting electrode (133a), a second superconducting electrode (133e), and a barrier separating the first superconducting electrode from the second superconducting electrode, the barrier comprising an insulating material (133d) and a ferromagnetic material or an insulating ferromagnetic material (133b).

9. The electronic circuit of any previous claim, wherein the first and second superconducting qubits are absent ferromagnetic material.

10. The electronic circuit of any previous claim, wherein the electronic circuit is absent read-out circuit elements which interface with the third group of circuit elements.

11. The electronic circuit of any previous claim wherein the tuneable coupler is configured to be capacitively coupled with at least one of the first superconducting qubit and the second superconducting qubit.

12. The electronic circuit of any previous claim, wherein the tuneable coupler is configured to couple the first superconducting qubit to the second superconducting qubit by a cross-Kerr ZZ interaction.

13. A system (1000) comprising the electronic circuit of any previous claim and a magnetic field source (170) for applying the magnetic field to the ferromagnetic Josephson junction.

14. A quantum processing unit (200) comprising the electronic circuit of any one of claims 1 to 12 or the system of claim 13.

15. A method of entangling superconducting qubits, comprising:
initialising (S101) a first superconducting qubit and a second superconducting qubit; and
applying (S103) a magnetic field pulse to a ferromagnetic Josephson junction of a tuneable coupler to selectively couple the first superconducting qubit and the second superconducting qubit based on a magnetisation state of the ferromagnetic Josephson junction.
